Europäisches Patentamt

European Patent Office

Office européen des brevets

(11) Publication number: **0 112 817**
**B1**

# EUROPEAN PATENT SPECIFICATION

(45) Date of publication of patent specification: **30.12.86**

(21) Application number: **82901843.1**

(22) Date of filing: **11.06.82**

(86) International application number:
**PCT/FI82/00025**

(87) International publication number:
**WO 83/04407 22.12.83 Gazette 83/29**

(51) Int. Cl.⁴: **B 67 D 5/02,** G 01 F 15/08,
A 01 J 7/00

(54) **MEANS IN VOLUME MEASUREMENTS OF MILK.**

(43) Date of publication of application:
**11.07.84 Bulletin 84/28**

(45) Publication of the grant of the patent:
**30.12.86 Bulletin 86/52**

(84) Designated Contracting States:
**DE FR NL**

(56) References cited:
**DE-A-2 014 438**
**DE-A-2 202 697**
**DE-B-1 097 153**
**FR-A-2 334 945**
**US-A-3 404 567**

(73) Proprietor: **Oy Hackman Ab**
**Koltek-Tehdas PL 18**
**SF-01231 Vantaa (FI)**

(72) Inventor: **KUJALA, Hannu**
**Alkutie 29-35 E 25**
**SF-00660 Hensinki 66 (FI)**
Inventor: **SANTASALO, Hanno**
**Luuvaniementie 14 A 14**
**SF-00350 Helsinki 35 (FI)**

(74) Representative: **Bühling, Gerhard, Dipl.-Chem.**
**et al**
**Patentanwaltsbüro Tiedtke-Bühling-Kinne**
**Grupe-Pellmann-Grams-Struif Bavariaring 4**
**D-8000 München 2 (DE)**

## Description

The present invention concerns a device in milk gathering from milk producers accomplished with the aid of tank cars, according to the pre-characterizing portion of claim 1.

A device of this type is known e.g. from DE—A—2014438.

During volume measurements of milk the milk is pumped through a pipe system into an air separator, wherein the milk surface will rise until a closing member affixed to the shaft of a float sensing the milk surface in the end closes the air hole leading to a venting means. The upper part of the air separator thus constitutes a closed system in which a pressure builds up gradually, which after rising to a given value overcomes the spring force of a directional valve disposed after the volume meter, and the directional valve will open. Thereby, milk starts to flow through the volume meter and keeps on flowing until the pump pushes nothing but air into the air separator. The surface of the milk in the air starts then to go down, and in the end the float is far enough down to cause the air hole to open and the pressure to discharge through the venting means. The venting means then closes, and the volume measuring of milk is ended.

The DE—A—2 014 438 shows a device comprising an air separator which is filled with milk by means of an air venting means from an external tank up to a certain level by means of producing a pressure lower than the atmospheric pressure before a pump disposed downstream of the air separator is switched on and is pumping the milk through the volume meter, in the beginning at a slow pumping rate and after reaching a higher level at a higher pumping rate.

Within this air separator fluctuations of pressure appear. These will result in the fact that differently high air portions remain in the amount of milk to be registered in its volume and thus falsify the measurement in the volume meter.

Such a device can not meet the legal requirement which have been intensified some time ago regarding the measuring accuracy when milk is pumped into collecting tanks.

The problem underlying the invention is to advance the device according to the classification in that manner that the measuring accuracy is raised during current measurement at the volume meter so that it fulfils higher demands.

This problem is solved by the features in the characterizing portion of patent claim 1.

The restriction of the fluctuations of pressure according to the invention within the air separator effects less measuring faults and due to this a more reliable registration of the correspondent amounts of milk pumped into the tank of the tank car.

Advantageous modifications of the invention derived from the subclaims.

Fig. 1 presents schematically an advantageous embodiment of the device according to the invention.

Fig. 2 displays the absolute error observed in a measuring device of prior art, expressed in litres and as per cent error, when the measuring vessel used was a 302 litre measuring vessel.

Fig. 2b displays the absolute error observed in the measuring device according to the invention, expressed in litres and as per cent error, when for the measuring a 302 litre measuring vessel was used as the measuring vessel.

Fig. 3a displays the absolute error observed in a measuring device of prior art, expressed in litres and as per cent error, when a 40 litre measuring vessel was used as measuring vessel.

Fig. 3b displays the absolute error observed in the measuring device according to the invention, expressed in litres and as per cent error, when a 40 litre measuring vessel was used as the measuring vessel.

Fig. 4a displays the absolute error observed in the measuring device of prior art, expressed in litres and as per cent error, when a 20 litre measuring vessel was used a measuring vessel.

Fig. 4b displays the absolute error observed in the measuring device according to the invention, expressed in litres and as per cent error, when a 20 litre measuring vessel was used as measuring vessel.

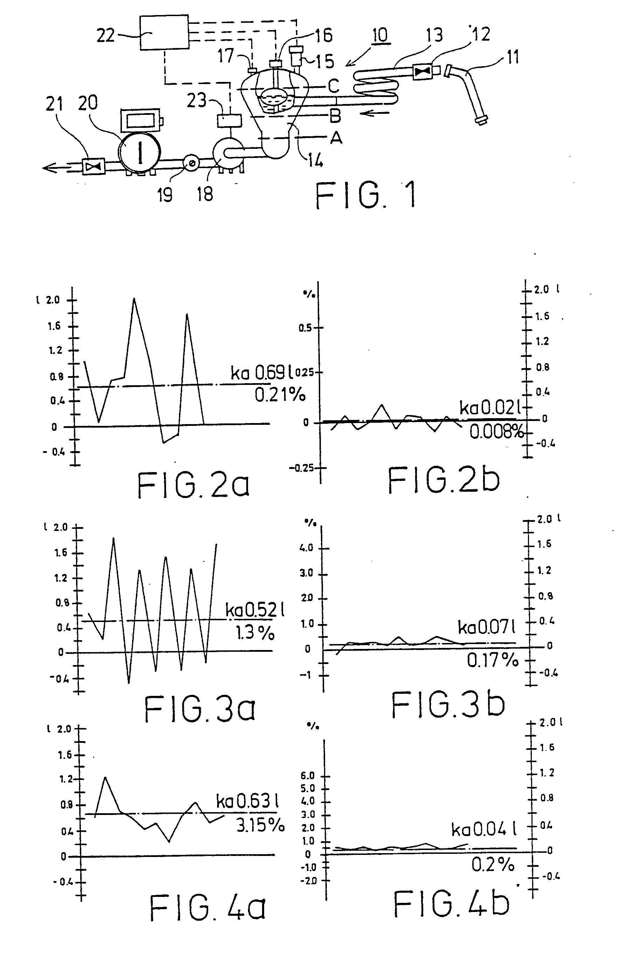

In the embodiment of Fig. 1 the device has been generally indicated with reference numeral 10. The device 10 comprises a suction pipe 11, a flexible suction tube 13 provided with shut-off valve 12, and air separator 14, a pump 18, a volume meter 20 and a check valve 21. The air separator 14 has been provided with a venting means 15, a liquid level sensor 16 and a pressure pick-up 17. The reference numeral 22 indicates a control means, adapted to control the operation of the air separator 14. The signals from the liquid level sensor 16 and the pressure pick-up 17 are conducted to the control means 22. The pump 18 is advantageously a centrifugal pump disposed to be controlled by a hydrualic pump control system 23 in accordance with the control signal from the control means 22. The reference numeral 19 indicates a filter inserted in the pipeline between the pump 18 and the volume meter 20.

The operation of the device 10 is as follows. Before starting the measurement, the shut-off valve 12 is closed while the hydraulic pump 18 connected to the engine of the vehicle is in operation and the device 10 is filled with milk forward from the level A of the air separator 14 in the direction of milk flow. The person conducting the measurement switches the device 10 on with the aid of a switch on the control means 22. The pressure pick-up 17 transmits the pressure prevailing in the air separator 14. If the pressure in the air separator 14 is higher than the predetermined limit pressure which is lower than the atmospheric pressure, the venting means 15 is switched on and extracts air from the air separator 14.

The person conducting the measurement connects the flexible suction tube 13 to the farm tank and opens the bottom valve of the farm tank or, in milk can collection, attaches the suction pipe 11 and pushes the suction pipe 11 into the milk can and opens the shut-off valve 12, whereby milk begins under action of differential pressure to flow into the air separator 14. The venting means 15 continuously evacuates air entering the air separator 14, at the same time drawing more milk into the air separator 14.

When the surface of the milk reaches the first upper level B in the air separator 14, the pump 18 is switched on at "a slow pumping rate", which is higher than or equal to the minimum flow rate allowed for the volume meter 20. It should thus be noted that in the device 10 of the present invention the pump 18 has been so disposed in relation to the air separator 14 that the air separator 14 is located on the intake side of the pump 18.

When the surface of the milk in the air separator 14 reaches the second upper level C, the pump 18 is switched on to "the full pumping rate" and the venting means 15 stops the elimination of air. If no air is now entrained with the milk, the operation of the device 10 continues in this state.

If air in the milk enters the air separator 14, the air is separated to be in the top part of the air separator 14 and at the same time the pressure in the top part of the air separator 14 increases, whereby the increased pressure of the air pushes down the surface of the milk in the air separator 14. When the surface of the milk in the air separator 14 falls below the level C, the venting means 15 starts to evacuate air until the surface of the milk in the air separator 14 again reaches the level C. When the milk surface again reaches the level C in the air separator 14, the venting means 15 stops.

If the entrance of milk into the air separator 14 totally stops e.g. when the farm tank is exhausted, the surface of the milk goes down in spite of continuous air venting, first to the level B, whereby the pump 18 is switched to "the slow pumping rate", and further to the lowest level A, whereby the pump 18 stops. The volume of the milk drawn that has flown through the device 10 can be read from the volume meter 20.

The control of the pump 18 at two different pumping rates is substantial. It is further essential to extract air by utilizing subatmospheric pressure. An advantageous embodiment is that in which the subatmospheric pressure required for air extraction is provided by using the compressed air of the brake system of a car. Furthermore the manner in which subatmospheric pressure is maintained in the air separator 14 is important. The air separator 14 is further advantageously designed to be conical so that the air separator 14 conically tapers downwards, whereby a highly accurate termination volume is obtained.

With the aid of the device 10 a high accuracy of measurement is achieved, as shown by the results of comparison presented in Figs. 2a and 2b, respectively 3a and 3b, respectively 4a and 4b. The calibration of the volume meter 20 was performed in these comparative measurements with water at the flow rate of 300 litres per minute. The measuring vessels has capacities of 302, 40 and 20 litres. The raw milk had been quieted during two hours and its temperature was 3—4°C. The actions of the person conducting the measurements were similar to those in normal suction gathering measurement. On the whole, all steps had been standardized in general both in the measurements with the measuring device of prior art and in those with the measuring device 10.

As the errors displayed in Figs. 2a and 2b, respectively 3a and 3b, and 4a and 4b, expressed in litres and as per cent error indicate, a quite substantially better measuring accuracy is reached with the device 10. It can be deduced from the results of measurement that the means of the measured values reveal the systematic errors caused by the air venting. Secondly, the individual variations between results of measurement indicate the random errors. Such random errors are the volume variations incurred at the start and termination. It should further be noted that any small measured quantities are only pumped at the "slow flow rate", which causes about 0.1% higher calibration, according to the characteristic curve of the volume meter 20. This is believed to account for the difference between the means found with small and large measured quantities.

**Claims**

1. Device in milk gathering from milk producers accomplished with the aid of tank cars, said device (10) comprising a flexible suction tube (13) or a suction pipe (11) and a flexible suction tube (13), an air separator (14) provided with a venting means (15) and a liquid level sensor (16), a pump (18) and a volume meter (20), the milk being drawn with said device (10) from the farm tank or from a milk can into the air separator (14), whence the milk is further conducted to the volume meter (20), the pump (18) being so disposed in relation to the air separator (14) that the air separator (14) is located on the intake side of the pump (18), said device (10) further comprising a pump control system (23) adapted to control the pump (18) in accordance to a signal from a control means (22) in such manner that when the milk surface in the air separator (14) reaches a first upper level (B) the pump (18) is switched on to operate at a slow pumping rate, and that when the milk surface reaches in the air separator (14) a second upper level (C) higher than said first upper level (B) the pump (18) becomes switched to operate at a higher pumping rate, characterized in that the device (10) is provided with a pressure pick-up (17) adapted to signal to the control means (22) the pressure prevailing in the air separator (14), said control means (22) being adapted to control the operation of the venting means (15) in such manner that the venting means (15) is connected to operate when the pressure in the air separator (14) transmitted by means of said pressure pick-up (17) exceeds a predetermined limit pressure (P₁), which is lower than atmospheric pressure.

2. Device according to claim 1, characterized in that the pump control system (23) has been adapted to stop the pump (18) when the milk surface falls below a lowest level (A) in the air separator (14).

3. Device according to claim 1 or 2, characterized in that the pump control system (23) is a hydraulic control system.

4. Device according to anyone of claims 1 to 3, characterized in that the air separator (14) is conically tapering downward.

5. Device according to anyone of claims 1 to 4, characterized in that the subatmospheric pressure required for air separation is produced by using the compressed air of the tank car's brake system.

**Patentansprüche**

1. Vorrichtung für die Milchsammlung bei Milcherzeugern, die mit Hilfe von Tankwagen durchgeführt wird, wobei die erwähnte Vorrichtung (10) einen Ansaugschlauch (13) oder ein Ansaugrohr (11) und einen Ansaugschlauch (13), einen mit einer Entlüftungseinrichtung (15) und einem Flüssigkeitsstandfühler (16) ausgestatteten Luftabscheider (14), eine Pumpe (18) und eine Volumenmeßeinrichtung (20) enthält, wobei die Milch mit der erwähnten Vorrichtung (10) aus dem Tank des landwirtschaftlichen Betriebes oder aus einer Milchkanne in den Luftabscheider (14) angesaugt wird, von wo die Milch zu der Volumenmeßeinrichtung (20) weitergeleitet wird, wobei die Pumpe (18) in bezug auf den Luftabscheider (14) so angeordnet ist, daß sich der Luftabscheider (14) an der Saugseite der Pumpe (18) befindet, wobei die erwähnte Vorrichtung (10) ferner ein Pumpensteuersystem (23) enthält, das dafür eingerichtet ist, die Pumpe (18) in Übereinstimmung mit einem Signal aus einer Steuereinrichtung (22) derart zu steuern, daß die Pumpe (18) eingeschaltet wird, um mit einer langsamen Pumpgeschwindigkeit zu arbeiten, wenn die Milchoberfläche in dem Luftabscheider (14) einen ersten oberen Füllstand (B) erreicht, und daß die Pumpe (18) umgeschaltet wird, um mit einer höheren Pumpgeschwindigkeit zu arbeiten, wenn die Milchoberfläche in dem Luftabscheider (14) einen zweiten oberen Füllstand (C) erreicht, der höher als der erwähnte erste obere Füllstand (B) liegt, dadurch gekennzeichnet, daß die Vorrichtung (10) mit einem Druck-Meßfühler (17) ausgestattet ist, der dafür eingerichtet ist, der Steuereinrichtung (22) den Druck zu melden, der in dem Luftabscheider (14) herrscht, wobei die erwähnte Steuereinrichtung (22) dafür eingerichtet ist, den Betrieb der Entlüftungseinrichtung (15) derart zu steuern, daß die Entlüftungseinrichtung (15) eingeschaltet wird, um zu arbeiten, wenn der durch den Druck-Meßfühler (17) übermittelte Druck in dem Luftabscheider (14) einen vorgegebenen Grenzdruck (P₁), der niedriger als der Atmosphärendruck ist, überschreitet.

2. Vorrichtung nach Anspruch 1, dadurch gekennzeichnet, daß das Pumpensteuersystem (23) dafür eingerichtet ist, die Pumpe (18) auszuschalten, wenn die Milchoberfläche unter einen untersten Füllstand (A) in dem Luftabscheider (14) herabsinkt.

3. Vorrichtung nach Anspruch 1 oder 2, dadurch gekennzeichnet, daß das Pumpensteuersystem (23) ein hydraulisches Steuersystem ist.

4. Vorrichtung nach einem der Ansprüche 1 bis 3, dadurch gekennzeichnet, daß sich der Luftabscheider (14) kegelförmig nach unten verjüngt.

5. Vorrichtung nach einem der Ansprüche 1 bis 4, dadurch gekennzeichnet, daß der unteratmosphärische Druck, der für die Luftabscheidung benötigt wird, unter Anwendung der Druckluft des Bremssystems des Tankwagens erzeugt wird.

**Revendications**

1. Dispositif de collecte de lait chez des producteurs de lait réalisée à l'aide de camions-citernes, ledit dispositif (10) comprenant un tuyau d'aspiration flexible (13) ou un tube d'aspiration (11) et un tuyau d'aspiration flexible (13), un séparateur d'air (14) muni d'un moyen d'aération (15) et un détecteur de niveau de liquide (16), une pompe (18) et un débitmètre (20), le lait étant aspiré par le dispositif (10) du réservoir de la ferme ou du bidon de lait dans le séparateur d'air (14), d'où le lait est ensuite dirigé vers le débitmètre (20), la pompe (10) étant disposée par rapport au séparateur d'air (14) de manière que ce séparateur d'air (14) soit situé sur le côté entrée de la pompe (18), ledit dispositif (10) comprenant en outre un système de commande de pompe (23) adapté à commander la pompe (18) en accord avec un signal provenant du moyen de commande (22) d'une manière telle que lorsque la surface du lait dans le séparateur d'air (14) atteint un premier niveau supérieur (B), la pompe (18) soit branchée de manière à fonctionner à une vitesse de pompage lente, et lorsque la surface du lait atteint dans le séparateur d'air (14) un second niveau supérieur (C) supérieur audit premier niveau supérieur (B), la pompe (18) soit commutée pour fonctionner à une vitesse de pompage supérieure, caractérisé en ce que le dispositif (10) est muni d'un détecteur de pression (17) adapté à signaler au moyen de commande (22) la pression régnant dans le séparateur d'air (14), ledit moyen de commande (22) étant adapté à commander le fonctionnement du moyen d'aération (15) d'une manière telle que le moyen d'aération (15) soit connectée pour fonctionner quand la pression dans le séparateur d'air (14) transmise au moyen dudit détecteur de pression (17) dépasse une pression limite déterminée (P₁) qui est inférieure à la pression atmosphérique.

2. Dispositif selon la revendication 1, caractérisé en ce que le système de commande de pompe (23) a été adapté à arrêter la pompe (18) quand la surface du lait tombe au-dessous du niveau inférieur (A) dans le séparateur d'air (14).

3. Dispositif selon la revendication 1 ou 2, caractérisé en ce que le système de commande de pompe (23) est un système de commande hydraulique.

4. Dispositif selon l'une quelconque des revendications 1 à 3, caractérisé en ce que le séparatuer d'air (14) a une forme conique orientée vers le bas.

5. Dispositif selon l'une quelconque des revendications 1 à 4, caractérisé en ce que la pression sous-atmosphérique nécessaire à la séparation de l'air est produite en utilisant l'air comprisé du système de freinage du camion-citerne.

FIG. 1

FIG.2a

FIG.2b

FIG.3a

FIG.3b

FIG.4a

FIG.4b